Europäisches Patentamt

European Patent Office

Office européen des brevets

(11) Veröffentlichungsnummer: **0 185 168**
**B1**

(12) **EUROPÄISCHE PATENTSCHRIFT**

(45) Veröffentlichungstag der Patentschrift:
18.05.88

(21) Anmeldenummer: 85113499.9

(22) Anmeldetag: 24.10.85

(51) Int. Cl.⁴: **F 16 K 31/11, F 16 B 21/08**

(54) **Betätigungseinrichtung für Ventile.**

(30) Priorität: 20.12.84 DE 3446410

(43) Veröffentlichungstag der Anmeldung:
25.06.86 Patentblatt 86/26

(45) Bekanntmachung des Hinweises auf die Patenterteilung:
18.05.88 Patentblatt 88/20

(84) Benannte Vertragsstaaten:
DE FR GB IT

(56) Entgegenhaltungen:
AT-B-371 229
CH-A-409 561
DE-A-3 134 756
DE-A-3 320 650
DE-B-2 717 687
DE-C-2 158 248

(73) Patentinhaber: **WABCO Westinghouse Steuerungstechnik GmbH & Co., Bartweg 13 Postfach 91 12 70, D-3000 Hannover 91 (DE)**

(72) Erfinder: **Brausfeld, Walter, Dipl.- Ing., Hannoversche Strasse 101, D-3000 Hannover 6 1 (DE)**
Erfinder: **Göttling, Helmut, Furhenkamp 4, D-3004 Isernhagen 4 (DE)**
Erfinder: **Möller, Rudolf, Ing. grad., Knülweg 15 c, D-3007 Gehrden 1 (DE)**
Erfinder: **Müller, Peter, Ossietzkyring 37 F, D-3000 Hannover 91 (DE)**
Erfinder: **Scharnowski, Gerhard, Ing. grad., Im Vogelsang 12, D-3007 Gehrden 1 (DE)**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Betätigungseinrichtung für Ventile, insbesondere elektromagnetisch betätigbare Wegeventile, gemäß dem Oberbegriff des Patentanspruchs 1.

Derartige Betätigungseinrichtungen werden insbesondere als Handbetätigung für Elektro-Magnetventile eingesetzt, um bei Ausfall des Antriebsmittels für das Ventilglied (Spannungsausfall, Defekt an Spule oder Anker) das Ventilglied in eine Position bringen zu können, in welcher eine Arbeitsleitung mit einem Medium beaufschlagbar ist.

Aus der DE-C-2 158 248 ist eine Betätigungseinrichtung der eingangs erwähnten Art bekannt.

Diese Einrichtung weist einen in einer offenen Gehäuseausnehmung eines Mehrwege-Magnetventils angeordneten, als Betätigungsglied dienenden Schaltbolzen auf, der in Richtung einer Längsachse verschiebbar und um einen vorbestimmbaren Betrag um seine Längsachse drehbar ist. Der Schaltbolzen ist mit einer abgewinkelten Nut versehen, in die ein die Axialbewegung und die Drehbewegung des Schaltbolzens begrenzender Führungsstift eintaucht. Als Halterung für den Führungsstift dient eine quer zur Längsachse der Gehäuseausnehmung angeordnete Bohrung im Gehäuse. Mittels Dichtringen, die in in Umfangsrichtung des Schaltbolzens verlaufenden Nuten angeordnet sind und an der die Gehäuseausnehmung begrenzenden Wandung dichtend anliegen, wird ein Austreten von Druckmittel durch den Spalt zwischen der Wandung der Gehäuseausnehmung und der Mantelfläche des Schaltbolzens verhindert. Der Schaltbolzen weist eine Schräge auf, über die bei Betätigen des Schaltbolzens der als Ventilglied ausgebildete Anker des Ventils vom Ventilsitz abgehoben wird.

Diese bekannte Einrichtung weist mehrere, insbesondere zum Abdichten, Führen und Halten des Betätigungsgliedes in der Gehäuseausnehmung notwendige Elemente auf, die einen relativ hohen Herstellungs- und Montageaufwand für die Einrichtung erforderlich machen.

In das Betätigungsglied müssen Nuten zur Aufnahme von Dichtringen eingearbeitet werden. Das Ventilgehäuse ist mit einer zusätzlichen Bohrung für den Führungs- und Sicherungsstift zu versehen. Bei der Montage der Einrichtung muß das Betätigungsglied zuerst mit den Dichtringen versehen, dann unter Vermeidung von Benehmung eingeführt und ausgerichtet werden. Der Führungs- und Sicherungsstift muß anschließend in die als Halterung dienende Bohrung des Ventilgehäuses eingepaßt werden.

Der Erfindung liegt die Aufgabe zugrunde, eine Einrichtung der eingangs genannten Art zu schaffen, die einfach im Aufbau ist und sich ohne zusätzliche Maßnahmen montieren läßt.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die erfindungsgemäße Einrichtung hat insbesondere den Vorteil, durch die Ausbildung des Betätigungsgliedes, des Halteelementes und des Dichtelementes als eine einstückige Baueinheit den Montageaufwand erheblich reduzieren zu können. Die gesamte Einrichtung kann als einfaches Kunststoff-Spritzteil hergestellt werden. Bei der Montage ist das Betätigungsglied lediglich in die offene Gehäuseausnehmung des Ventils einzuschieben und durch verstärkten Druck in Richtung der Längsachse des Betätigungsgliedes nach Art einer Schnappverbindung mit dem Ventilgehäuse zu verbinden.

Anstelle von Kunststoff kann als Material für das Betätigungsglied auch Metall genommen werden. In einem solchen Fall wird das Dichtelement mit einer auf den Metallkörper aufvulkanisierten Dichtlippe versehen. Das zur Begrenzung einer Axialbewegung des Betätigungsgliedes erforderliche Halteelement kann entweder ein auf das Betätigungsglied aufvulkanisiertes Teil sein oder aus federnd ausgebildeten Schnapphaken bestehen, die unlösbar mit dem Betätigungsglied verbunden bzw. Bestandteil des Betätigungsgliedes sind.

Anhand der Zeichnung werden nachstehend drei Ausführungsbeispiele der Erfindung näher erläutert.

Es zeigen:

Fig. 1 ein Elektro-Magnetventil mit einer einstückig ausgebildeten Handbetätigungseinrichtung, welche als Kunststoff-Spritzteil hergestellt ist, wobei das Dichtelement als angeformte Dichtlippe ausgebildet ist;

Fig. 2 ein Betätigungsglied mit einem als umlaufende Wulst ausgebildeten Dichtelement und

Fig. 3 einen Ausschnitt eines Elektro-Magnetventils mit einer Handbetätigungseinrichtung, welche in Richtung ihrer Längsachse verschiebbar und um ihre Längsachse drehbar im Ventilgehäuse angeordnet ist.

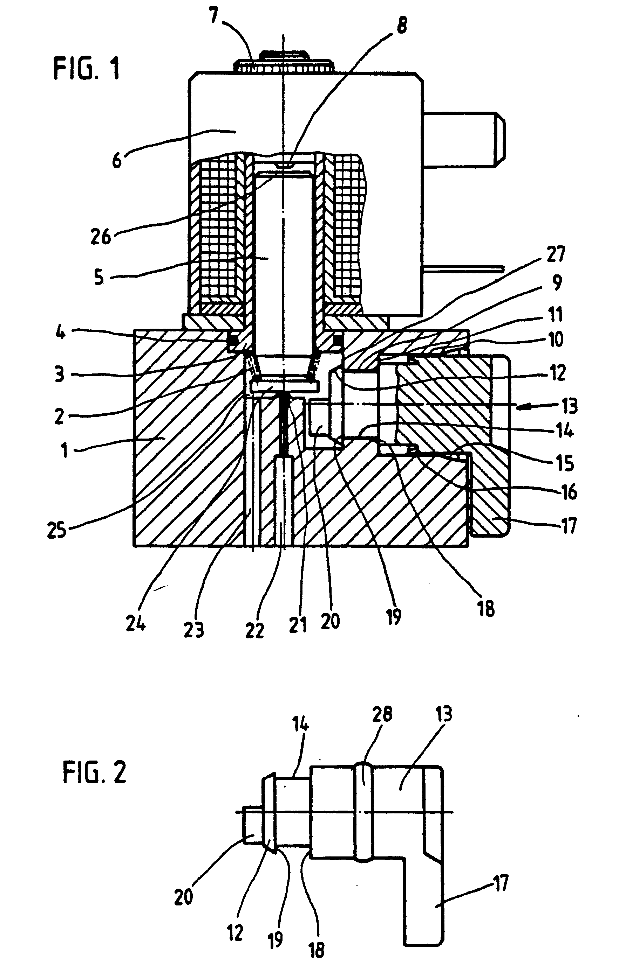

Das in Fig. 1 dargestellte Elektro-Magnetventil weist ein mit einem Druckmitteleingang 22 und einem Druckmittelausgang 23 versehenes Ventilgehäuse 1 sowie eine in einem Spulengehäuse 6 angeordnete Magnetspule auf. Die Magnetspule ist auf ein Ankerführungsrohr 3, welches mittels eines Dichtringes 4 gegen das Ventilgehäuse 1 abgedichtet ist, aufgeschoben. Auf ein im Ankerführungsrohr 3 angeordnetes Kopfstück, welches einen zur Atmosphäre hin führenden Druckmittelauslaß aufweist, ist eine Rändelmutter 7 aufgeschraubt. Die Rändelmutter 7 hält die Magnetspule (Spulengehäuse 6) auf dem Ankerführungsrohr 3 und somit auf dem Ventilgehäuse 1. Im Ankerführungsrohr 3 ist ein Anker 5 in Richtung seiner Längsachse

verschiebbar angeordnet. Der Anker 5 trägt an seinem der Druckmitteleingangskammer 25 zugewandten Seite einen Ventilkörper 24, der mit einem im Ventilgehäuse 1 vorgesehenen Einlaßventilsitz 21 ein Einlaßventil 24, 21 bildet. An seiner der Druckmitteleingangskammer 25 abgewandten Seite besitzt der Anker 5 einen Auslaßventilkörper 26, der mit einem am Kopfstück vorgesehenen Auslaßventilsitz 8 ein Auslaßventil 26, 8 bildet. Eine sich an einem Vorsprung des Ankerführungsrohres 3 abstützende Feder 2 beaufschlagt den mit dem Anker 5 verbundenen Ventilkörper 24 in Richtung auf den Einlaßventilsitz 21 zu und hält so das Einlaßventil 21, 24 bei stromloser Spule in der Schließstellung. Das Ventilgehäuse 1 weist eine quer zur Längsachse des Ankers 5 verlaufende als Stufenbohrung 9, 10, 11 ausgebildete offene Gehäuseausnehmung auf, die zur Aufnahme einer Einrichtung zur manuellen Betätigung des Ventils dient.

Die Betätigungseinrichtung ist einstückig ausgebildet und setzt sich im wesentlichen aus einem Betätigungsglied, einem ersten Anschlag, einem zweiten Anschlag und einem Dichtelement zusammen. Das Betätigungsglied 13 besitzt eine in Umfangsrichtung verlaufende nutartige Ausnehmung 14. Die die Ausnehmung 14 in Richtung der Längsachse des Betätigungsgliedes 13 begrenzenden einander zugewandten Wandungen dienen als erster Anschlag 19 und zweiter Anschlag 18. Der Abstand zwischen den beiden Anschlägen 19, 18 ist so bemessen, daß er der axialen Erstreckung der Abstufung 9 der sich zum Ventilgehäuseinneren zu verkleinernden Stufenbohrung 9, 10, 11 entspricht. Die Abstufung 9 erstreckt sich in die nutartige Ausnehmung 14 des Betätigungsgliedes 13 hinein, wobei die einander abgewandten Flächen der Abstufung 9 der Stufenbohrung 9, 10, 11, gesehen in Richtung der Längsachse der Stufenbohrung 9, 10, 11, als Anschlagflächen 27, 11 eines gehäusefesten Anschlages für die beiden Anschläge 18, 19 des Betätigungsgliedes 13 dienen. Die parallel zur Längsachse des Betätigungsgliedes 13 verlaufenden Flächen 9, 10 der Stufenbohrung 9, 10, 11 dienen als Führung für das Betätigungsglied 13. Der in der Druckmitteleingangskammer 25 gelegene erste Anschlag 19 weist einen konisch ausgebildeten Randbereich 12 auf, welcher sich beim Einführen des Betätigungsgliedes 13 in die Stufenbohrung 9, 10, 11 elastisch verformt und mit der Abstufung 9 der Stufenbohrung 9, 10, 11 nach Art einer Schnappverbindung zusammenwirkt, wobei der erste Anschlag 19 des Betätigungsgliedes 13 an der Anschlagfläche 27 und der zweite Anschlag 18 an der Anschlagfläche 11 der Abstufung 9 der Stufenbohrung 9, 10, 11 zur Anlage kommen.

An der der Druckmitteleingangskammer 25 zugewandten Stirnseite des Betätigungsgliedes 13 ist exzentrisch ein Nocken 20 angeordnet, mittels welchem bei einer Drehbewegung des Betätigungsgliedes 13 um seine Längsachse der mit dem Anker 5 verbundene Ventilkörper 24 vom Einlaßventilsitz 21 abhebbar ist. Der aus der Stufenbohrung 9, 10, 11 herausragende Teil des Betätigungsgliedes 13 weist einen als Handbetätigungshebel dienenden abgewinkelten Teil 17 auf.

An der Mantelfläche des den größeren Querschnitt aufweisenden Teiles des abgestuft ausgebildeten Betätigungsgliedes 13 ist eine umlaufende Dichtlippe 16 angeformt, welche dichtend an der Wandung der Abstufung 10 der Stufenbohrung 9, 10, 11 anliegt. Die Dichtlippe 16 ist in etwa V-förmig ausgebildet und so gerichtet, daß sie vom Druckmittel in der Druckmitteleingangskammer 25 gegen die Wandung der Abstufung 10 gedrückt wird.

Die Funktion der im vorstehenden beschriebenen Einrichtung wird nachfolgend näher erläutert.

Bei der Montage des Elektro-Magnetventils wird das Betätigungsglied 13 von der den größeren Durchmesser aufweisenden Seite der Stufenbohrung 9, 10, 11 her in die Stufenbohrung 9, 10, 11 eingeführt. Der konisch ausgebildete stirnseitige Randbereich 12 des Betätigungsgliedes 13 verformt sich elastisch bei Erreichen der Abstufung 9 soweit, daß sich das Betätigungsglied 13 mit seiner nutartigen Ausnehmung 14 in die den geringeren Durchmesser aufweisende Abstufen 9 der Stufenbohrung 9, 10, 11 einschieben läßt. Sobald der zweite Anschlag 18 des Betätigungsgliedes 13 an der Anschlagfläche 11 der Abstufung 9 der Stufenbohrung 9, 10, 11 zur Anlage kommt, nimmt der elastische erste Anschlag 19 seine ursprüngliche Form wieder an. Das Betätigungsglied 13 ist jetzt nach Art einer Schnappverbindung mit dem Ventilgehäuse 1 verbunden. Das Einführen des mit der Dichtlippe 16 versehenen Bereiches des Betätigungsgliedes 13 in die Stufenbohrung 9, 10, 11 wird durch eine am Eingang der Stufenbohrung 9, 10, 11 vorgesehene trichterförmige Erweiterung 15 erleichtert.

Soll der mit dem Anker 5 verbundene Ventilkörper 24 beim stromloser Spule vom Einlaßventilsitz 21 abgehoben werden, so wird das Betätigungsglied 13 mittels des Handbetätigungshebels 17 um seine Längsachse verdreht, und zwar soweit, bis der Nocken 20 des Betätigungsgliedes 13 am Ventilkörper 24 zur Anlage kommt, diesen zusammen mit dem Anker 5 nach oben in Richtung auf den Auslaßventilsitz 8 zu verschiebt und ihn aufgrund der Reibung zwischen Nocken 20 und Ventilkörper 24 in dieser Lage hält.

Es ist selbstverständlich möglich, am Betätigungsglied 13 und am Ventilgehäuse 1 Rastmittel vorzusehen, die eine oder mehrere Zwischenstellungen des Betätigungsgliedes 13 und somit des mit dem Anker 5 verbundenen Ventilkörpers 24 ermöglichen. Die Rastmittel können z. B. aus Vorsprüngen bestehen, die am Handbetätigungshebel 17 angeordnet sein können und mit entsprechenden Ausnehmungen in der Wand des Ventilgehäusses 1

zusammenwirken, wodurch die Einstückigkeit der Betätigungseinrichtung in vorteilhafter Weise gewahrt bleibt.

Anstelle der Dichtlippe 16 auf der Umfangsfläche des Betätigungsgliedes 13 kann auch eine ringförmige Dichtwulst an der Seite des ersten Anschlages 19 vorgesehen werden, die der Anschlagfläche 27 zugewandt ist. Durch den Druck in der Druckmitteleingangskammer 25 würde bei einer solchen Ausführungsform und Anordnung des Dichtelementes am Betätigungsglied 13 der erste Anschlag 19 mit dem Dichtelement gegen die Anschlagfläche gedrückt werden.

Auf eine Abstufung der offenen Gehäuseausnehmung zur Aufnahme des Betätigungsgliedes könnte bei einer derartigen Anordnung des Dichtelementes verzichtet werden. Als zweiter Anschlag zur Begrenzung bzw. zur Verhinderung einer axialen Bewegung des Betätigungsgliedes kann der Handbetätigungshebel 17 oder ein außerhalb der offenen Gehäuseausnehmung liegender am Betätigungsglied angeformter Anschlag dienen, der außen am Ventilgehäuse zur Anlage bringbar ist. Es ist auch möglich, das Dichtelement derart am Betätigungsglied anzuordnen, daß es die Funktion des zweiten Anschlages mitübernimmt.

Die als einstückige Baueinheit ausgebildete Betätigungseinrichtung kann sowohl als Kunststoff-Spritzteil hergestellt werden, als auch aus unterschiedlichen Materialien gefertigt werden. Soll die Betätigungseinrichtung aus unterschiedlichen Materialien bestehen, so ist es denkbar, das Dichtelement und den zur Schnappverbindung erforderlichen ersten Anschlag aus elastischem Material, wie z. B. Kunststoff oder Gummi, herzustellen und diese Teile nicht lösbar mit dem beispielsweise aus Metall bestehenden Betätigungsglied zu verbinden.

Denkbar ist es auch, den den ersten Anschlag aufweisenden Bereich der Betätigungseinrichtung geschlitzt auszubilden, um an diesem Teil die für eine Schnappverbindung erforderliche Elastizität zu erreichen.

Wie in Fig. 2 dargestellt, kann das Dichtelement auch als umlaufende Wulst 28 auf dem Umfang des des größeren Querschnitt aufweisenden Bereiches des Betätigungsgliedes 13 ausgebildet sein.

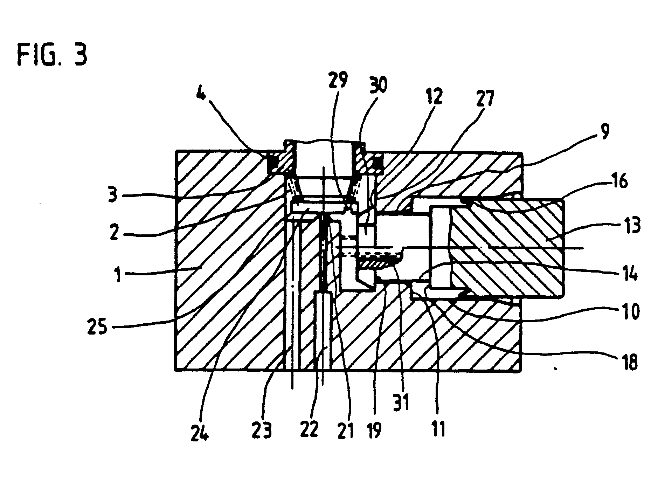

In Fig. 3 ist im Schnitt der mit der Betätigungseinrichtung ausgerüstete Teil eines Elektro-Magnetventils dargestellt, wobei das Betätigungsglied sowohl in Richtung seiner Längsachse verschiebbar als auch um seine Längsachse drehbar in einer offenen Gehäuseausnehmung angeordnet ist.

Der besseren Übersicht halber sind die den in Fig. 1 gezeigten Bauteilen gleichen Bauteile mit gleichen Bezugszeichen versehen.

Fig. 3 zeigt einen Ausschnitt eines Elektro-Magnetventils, welches ein mit einem Druckmitteleingang 22 und einem Druckmittelausgang 23 versehenes Ventilgehäuse 1 aufweist. Auf ein Ankerführungsrohr 3, welches mittels eines Dichtringes 4 gegen das Ventilgehäuse abgedichtet und am Ventilgehäuse 1 befestigt ist, ist eine nicht dargestellte Magnetspule aufgeschoben. Im Ankerführungsrohr 3 ist ein Anker in Richtung seiner Längsachse verschiebbar angeordnet. Der Anker trägt an seiner der Druckmitteleingangskammer 25 zugewandten Seite einen Ventilkörper 24, der mit einem im Ventilgehäuse 1 vorgesehenen Einlaßventilsitz 21 ein Einlaßventil 24, 21 bildet. Eine sich an einem Vorsprung des Ankerführungsrohres 3 abstützende Feder 2 beaufschlagt den mit dem Anker verbundenen Ventilkörper 24 in Richtung auf den Einlaßventilsitz 21 zu und hält so das Einlaßventil 21, 24 bei stromloser Spule in der Schließstellung.

Das Ventilgehäuse 1 weist eine quer zur Längsachse des Ankers verlaufende, als Stufenbohrung 9, 10, 11 ausgebildete offene Gehäuseausnehmung auf, die zur Aufnahme einer Einrichtung zur manuellen Betätigung des Ventils dient.

Das Betätigungsglied weist eine in Umfangsrichtung verlaufende nutartige Ausnehmung 14 auf. Die die Ausnehmung 14 in Richtung der Längsachse des Betätigungsgliedes begrenzenden einander zugewandten Wandungen dienen als ein erster Anschlag 19 und ein zweiter Anschlag 18. Der Abstand zwischen den beiden Anschlägen 18, 19 ist so bemessen, daß er größer ist als die axiale Erstreckung der Abstufung 9 der Stufenbohrung 9, 10, 11. Die Abstufung 9 erstreckt sich in die nutartige Ausnehmung 14 des Betätigungsgliedes 13 hinein, wobei die einander abgewandten Flächen der Abstufung 9 der Stufenbohrung, gesehen in Richtung der Längsachse der Stufenbohrung 9, 10, 11, als Anschlagflächen 27, 11 für die beiden Anschläge 19, 18 des Betätigungsgliedes 13 dienen. Die parallel zur Längsachse des Betätigungsgliedes 13 verlaufenden Flächen 9, 10 der Stufenbohrung 9, 10, 11 dienen als Führung für das Betätigungsglied 13. Der in der Eingangskammer 25 gelegene erste Anschlag 19 weist einen konisch ausgebildeten Randbereich 12 auf, welcher sich beim Einführen des Betätigungsgliedes 13 in die Stufenbohrung 9, 10, 11 elastisch verformt und mit der Abstufung 9 der Stufenbohrung 9, 10, 11 nach Art einer Schnappverbindung zusammenwirkt, wobei der erste Anschlag 19 des Betätigungsgliedes 13 an der Anschlagfläche 27 und der zweite Anschlag 18 an der Anschlagfläche 11 der Abstufung 9 der Stufenbohrung 9, 10, 11 zur Anlage bringbar ist.

An der der Druckmitteleingangskammer 25 zugewandten Stirnseite des Betätigungsgliedes 13 ist eine Sackbohrung zur Aufnahme einer Feder 31 vorgesehen, welche sich an einem Teil des Ventilgehäuses 1 abstützt und so das Betätigungsglied 13 mit seinem ersten Anschlag 19 an der Anschlagfläche 27 der Abstufung 9 der Stufenbohrung 9, 10, 11 hält.

Der Ventilkörper 24 weist auf seiner der Druckmitteleingangskammer zugewandten Seite eine schlitzartige Ausnehmung 29 auf, in welche der konisch ausgebildete Randbereich 12 des Betätigungsgliedes 13 bei einer Verschiebebewegung des Betätigungsgliedes 13 in Richtung auf die Druckmitteleingangskammer 25 zu nach Art einer Schnappverbindung einrastet. Eine im konisch ausgebildeten Randbereich 12 des Betätigungsgliedes 13 vorgesehene Ausnehmung 30 ermöglicht es, bei einer Verdrehbewegung des Betätigungsgliedes 13 um seine Längsachse die Rastverbindung zu lösen.

An der Mantelfläche des den größeren Querschnitt aufweisenden Teiles des Betätigungsgliedes 13 ist eine umlaufende Dichtlippe 16 angeformt, welche dichtend an der Wandung der Abstufung 10 der Stufenbohrung 9, 10, 11 anliegt. Die Dichtlippe 16 ist in etwa V-förmig ausgebildet und so gerichtet, daß sie vom Druckmittel in der Druckmitteleingangskammer 25 gegen die Wandung der Abstufung 10 gedrückt wird.

Die Funktion der im vorstehenden beschriebenen Einrichtung wird nachfolgend erläutert. Bei der Montage des Elektro-Magnetventils wird das Betätigungsglied 13 von der den größeren Durchmesser aufweisenden Seite der Stufenbohrung 9, 10, 11 her in die Stufenbohrung 9, 10, 11 eingeführt. Der konisch ausgebildete stirnseitige Randbereich 12 des Betätigungsgliedes 13, der als Gleitfläche für den gehäusefesten Anschlag 9, 27 dient, verformt sich elastisch bei Erreichen der Abstufung 9 soweit, daß sich das Betätigungsglied 13 mit seiner nutartigen Ausnehmung 14 in die den geringeren Durchmesser aufweisende Abstufung 9 der Stufenbohrung einschieben läßt. Sobald der den ersten Anschlag 19 bildende konische Randbereich 12 durch die Abstufung 9 hindurchgeführt ist, nimmt der elastische Randbereich 12 seine ursprüngliche Form wieder an. Die Feder 31 drückt das Betätigungsglied 13 mit dem ersten Anschlag 19 gegen die Anschlagfläche 27 der Abstufung 9, 10, 11. Das Betätigungsglied 13 ist jetzt gegen Herausgleiten aus der Stufenbohrung 9, 10, 11 gesichert.

Soll der mit dem Anker 5 verbundene Ventilkörper 24 bei stromloser Spule vom Einlaßventilsitz 21 abgehoben werden, so wird das Betätigungsglied 13 gegen die Kraft der Feder 31 in Richtung auf die Druckmitteleingangskammer 25 zu verschoben, und zwar so weit, bis der konisch ausgebildete Randbereich 12 den mit dem Anker verbundenen Ventilkörper 24 vom Einlaßventilsitz 21 abhebt und der konisch ausgebildete Randbereich 12 in die Ausnehmung 29 des Ventilkörpers 24 einrastet.

Um den mit dem Anker verbundenen Ventilkörper 24 wieder in seine Ausgangsstellung bringen zu können, wird das Betätigungsglied 13 so weit um seine Längsachse verdreht, bis die im konischen Randbereich 12 vorgesehene Ausnehmung 30 des Betätigungsgliedes in den Bereich des im Ventilkörper angeordneten Schlitzes 29 gelangt und das Betätigungsglied 13 mittels der Kraft der Feder 31 wieder in seine Ausgangsstellung verschoben wird.

Es ist auch möglich, das auf dem Umfang des Betätigungsgliedes 13 angeordnete Dichtelement so auszubilden und so anzuordnen, daß es an der Anschlagfläche 11 des Vorsprunges 9 der Stufenbohrung zur Anlage bringbar ist und so zum einen die Funktion des zweiten Anschlags 18 und zum anderen die Funktion der Feder 31 übernimmt.

Der erste Anschlag und der zweite Anschlag des Betätigungsgliedes können auch als einzelne quer zur Längsachse des Betätigungsgliedes verlaufende Vorsprünge des Betätigungsgliedes ausgebildet sein. Ebenso ist es denkbar, den gehäusefesten Anschlag nicht als einen umlaufenden Vorsprung, sondern als einen segmentartigen Vorsprung auszubilden.

**Patentansprüche**

1. Betätigungseinrichtung für Ventile, insbesondere für elektromagnetisch betätigbare Wegeventile, mit einem in einer offenen Gehäuseausnehmung angeordneten Betätigungsglied (13) zur Not- und Hilfsbetätigung, sowie mit Mitteln zum Abdichten (16) des Betätigungsgliedes gegen die Gehäuseausnehmung sowie mit Mitteln zum Halten des Betätigungsgliedes in der Gehäuseausnehmung
gekennzeichnet durch die folgenden Merkmale:
a) die Mittel zum Halten bestehen aus wenigstens einem am Betätigungsglied (13) angeordneten ersten Anschlag (19) und einem am Betätigungsglied (13) vorgesehenen zweiten Anschlag (18), welche mit wenigstens einem gehäusefesten Anschlag (9) des Ventilgehäuses (1) zusammenwirken, derart, daß eine Bewegung des Betätigungsgliedes (13) in Richtung der Längsachse der Gehäuseausnehmung begrenzt oder verhindert wird;
b) wenigstens einer (19) der beiden am Betätigungsglied (13) angeordneten Anschläge ist elastisch verformbar ausgebildet und derart zum gehäusefesten Anschlag (9) angeordnet, daß er beim Einführen des Betätigungsgliedes (13) in die Gehäuseausnehmung unter elastischer Verformung am gehäusefesten Anschlag (9) vorbeiführbar ist und nach anschließender Wiedererlangung seiner ursprünglichen Form mit dem gehäusefesten Anschlag (9) nach Art einer Schnappverbindung zusammenwirkt;
c) der erste Anschlag (19), der zweite Anschlag (18) und die Mittel zum Abdichten (16) sind mit dem Betätigungsglied (13) nicht lösbar verbunden bzw. bilden mit dem Betätigungsglied (13) eine einstückige Baueinheit.

2. Betätigungseinrichtung nach Anspruch 1, dadurch gekennzeichnet, daß der erste Anschlag (19) und der zweite Anschlag (18) auf wenigstens einem Teil des Umfanges des Betätigungsgliedes (13) in einem vorbestimmbaren axialen Abstand zueinander angeordnet sind.

3. Betätigungseinrichtung nach wenigstens einem der vorhergehenden Ansprüche, dadurch gekennzeichnet, daß die beiden Anschläge (19, 18) des Betätigungsgliedes (13) von den einander zugewandten Wandungen einer nutartigen Ausnehmung (14) gebildet werden, welche in Umfangsrichtung des Betätigungsgliedes (13) verlaufend am Betätigungsglied (13) vorgesehen ist.

4. Betätigungseinrichtung nach wenigstens einem der vorhergehenden Ansprüche, dadurch gekennzeichnet, daß der erste Anschlag (19) einen konisch ausgebildeten Randbereich (12) aufweist, der als Gleitfläche für den gehäusefesten Anschlag dient.

5. Betätigungseinrichtung nach wenigstens einem der vorhergehenden Ansprüche, gekennzeichnet durch die folgenden Merkmale:
a) die offene Gehäuseausnehmung zur Aufnahme des Betätigungsgliedes (13) ist als Stufenbohrung (9, 10, 11) ausgebildet, wobei die Abstufungen in Richtung auf das Ventilgehäuseinnere zu einen kleiner werdenden Durchmesser aufweisen;
b) das Betätigungsglied (13) ist abgestuft ausgebildet, wobei die Abstufungen in Richtung auf das Ventilgehäuseinnere zu einen kleiner werdenden Durchmesser aufweisen;
c) der dem Ventilgehäuseinneren zugewandte Endbereich des Betätigungsgliedes (13) weist einen sich radial nach außen erstreckenden umlaufenden Vorsprung auf, der als erster Anschlag (19) des Betätigungsgliedes (13) dient;
d) die dem Ventilgehäuseinneren zugewandte Abstufung (9) der Stufenbohrung (9, 10, 11) dient als gehäusefester Anschlag;
e) die dem ersten Anschlag (19) gegenüberliegende Abstufung des Betätigungsgliedes (13) dient als zweiter Anschlag (18) des Betätigungsgliedes (13);
f) der gehäusefeste Anschlag (9) ist so angeordnet, daß er bei montiertem Betätigungsglied (13) mit seinen beiden einander abgewandten Anschlagflächen (11, 27) zwischen den beiden Anschlägen (19, 18) des Betätigungsgliedes (13) gelegen ist;
g) auf dem Umfang des den größeren Durchmesser aufweisenden Teiles des Betätigungsgliedes (13) ist ein Dichtelement (16, 28) vorgesehen, welches dichtend an der Wandung des den größeren Durchmesser aufweisenden Teiles (10) der Stufenbohrung (9, 10, 11) anliegt.

6. Betätigungseinrichtung nach wenigstens einem der vorhergehenden Ansprüche, dadurch gekennzeichnet, daß als Mittel zum Abdichten auf dem Umfang des Betätigungsgliedes eine umlaufende Wulst (28) vorgesehen ist, die an der Wandung (10) der offenen Gehäuseausnehmung (9, 10, 11) dichtend anliegt.

7. Betätigungseinrichtung nach wenigstens einem der vorhergehenden Ansprüche 1 bis 5, dadurch gekennzeichnet, daß als Mittel zum Abdichten auf dem Umfang des Betätigungsgliedes eine umlaufende Dichtlippe (16) vorgesehen ist, die an der Wandung (10) der offenen Gehäuseausnehmung (9, 10, 11) dichtend anliegt.

8. Betätigungseinrichtung nach wenigstens einem der vorhergehenden Ansprüche, dadurch gekennzeichnet, daß der zweite Anschlag (18) von dem auf dem Umfang des Betätigungsgliedes (13) angeordneten Dichtelement gebildet wird.

9. Betätigungseinrichtung nach wenigstens einem der vorhergehenden Ansprüche, dadurch gekennzeichnet, daß die Mittel zum Halten und die Mittel zum Abdichten aus elastischem Material bestehen und unlösbar mit dem Betätigungsglied verbunden sind.

10. Betätigungseinrichtung nach wenigstens einem der vorhergehenden Ansprüche, dadurch gekennzeichnet, daß das Betätigungsglied (13) mit den Mitteln zum Halten und den Mitteln zum Abdichten als Kunststoffspritzteil hergestellt ist.

11. Betätigungseinrichtung nach wenigstens einem der vorhergehenden Ansprüche, dadurch gekennzeichnet, daß die Mittel zum Abdichten des Betätigungsgliedes in der Gehäuseausnehmung aus einem umlaufenden Vorsprung bestehen, der an der Seite des ersten Anschlages des Betätigungsgliedes (13) angeordnet ist, die der zugeordneten Anschlagfläche (27) des gehäusefesten Anschlages (9) zugewandt ist.

## Claims

1. An actuating device for valves, especially for electromagnetically operated directional control valves, having an actuating member (13) for emergency and auxiliary actuation arranged in an open recess in the housing, and having means for sealing (16) the actuating member to the housing recess, and means for retaining the actuating member in the housing recess, characterised by the following features:
a) the retaining means consist of at least one first stop member (19) arranged on the actuating member (13) and a second stop member (18) provided on the actuating member (13), which stop members cooperate with at least one fixed housing stop member (9) of the valve housing (1) in such a way that movement of the actuating member (13) in the direction of the longitudinal axis of the housing recess is limited or prevented;

b) at least one (19) of the two stop members arranged on the actuating member (13) is elastically deformable and is so arranged with respect to the fixed stop member (9) of the housing that on introduction of the actuating member (13) into the housing recess it can be taken past the fixed stop member (9) of the housing while being elastically deformed, and then on returning to its original shape cooperates with the fixed stop member (9) of the housing in the manner of a snap fastener;

c) the first stop member (19), the second stop member (18) and the sealing means (16) are non-detachably connected to the actuating member (13) or form a one-piece unit with the actuating member (13).

2. An actuating device according to Claim 1, characterised in that the first stop member (19) and the second stop member (18) are arranged over at least part of the periphery of the actuating member (13) at an axial distance from each other that can be predetermined.

3. An actuating device according to at least one of the preceding Claims, characterised in that the two stop members (19, 18) of the actuating member (13) are formed by the walls, facing each other, of a groove-like recess (14) provided on the actuating member (13) and running circumferentially round the actuating member (13).

4. An actuating device according to at least one of the preceding Claims, characterised in that the first stop member (19) has a conical edge region (12) which serves as a glide surface for the fixed stop member of the housing.

5. An actuating device according to at least one of the preceding Claims, characterised by the following features:

a) the open housing recess to receive the actuating member (13) is in the form of a stepped bore (9, 10, 11), the steps having a diameter which decreases towards the inside of the valve housing;

b) the actuating member (13) is stepped, the steps having a diameter which decreases towards the inside of the valve housing;

c) the end region of the actuating member (13) facing towards the inside of the valve housing has a circumferential projection which extends radially outwards and serves as the first stop member (19) of the actuating member (13);

d) the step (9) of the stepped bore (9, 10, 11) facing towards the inside of the valve housing serves as the fixed stop member of the housing;

e) the step of the actuating member (13) opposite the first stop member (19) serves as the second stop member (18) of the actuating member (13);

f) the fixed stop member (9) of the housing is so arranged that when the actuating member (13) is mounted, the stop member (9) is located with its two stop surfaces (11, 27) facing away from each other situated between the two stop members (19, 18) of the actuating member (13);

g) on the periphery of the part of the actuating member (13) having the larger diameter a sealing element (16, 28) is provided which fits with a sealing effect against the wall of the part (10) of the stepped bore (9, 10, 11) having the larger diameter.

6. An actuating device according to at least one of the preceding Claims, characterised in that as means for sealing on the periphery of the actuating member a circumferential bead (28) is provided which fits with a sealing effect against the wall (10) of the open housing recess (9, 10, 11).

7. An actuating device according to at least one of the preceding Claims 1 to 5, characterised in that as means for sealing on the periphery of the actuating member a circumferential sealing lip (16) is provided which fits with a sealing effect against the wall (10) of the open housing recess (9, 10, 11).

8. An actuating device according to at least one of the preceding Claims, characterised in that the second stop member (18) is formed by the sealing element arranged on the periphery of the actuating member (13).

9. An actuating device according to at least one of the preceding Claims, characterised in that the retaining means and the sealing means consist of resilient material and are non-detachably connected to the actuating member.

10. An actuating device according to at least one of the preceding Claims, characterised in that the actuating member (13) is produced with the retaining means and the sealing means as an injection-moulded plastics part.

11. An actuating device according to at least one of the preceding Claims, characterised in that the means for sealing the actuating member in the housing recess consists of a circumferential projection which is arranged on the side of the first stop member of the actuating member (13) facing towards the associated stop surface (27) of the fixed stop member (9) of the housing.

**Revendications**

1. Dispositif d'actionnement pour soupapes, notamment pour distributeurs à commande électromagnétique, comprenant un organe d'actionnement (13) prévu pour l'actionnement de secours et auxiliaire, qui est monté dans une cavité ouverte du corps, ainsi que des moyens d'étanchéité (16) assurant le montage à joint étanche de l'organe d'actionnement par rapport à la cavité du corps, ainsi que des moyens de retenue servant à retenir l'organe d'actionnement dans la cavité du corps, caractérisé par les traits caractéristiques suivants:

a) les moyens de retenue sont constitués par au moins une première butée (19) agencée sur l'organe d'actionnement (13) et une deuxième butée (18) prévue sur l'organe d'actionnement (13), qui coopèrent avec au moins une butée (9) solidaire du corps, prévue sur le corps (1) de la soupape, de telle manière que le déplacement de l'organe d'actionnement (13) dans la direction parallèle à l'axe longitudinal de la cavité du corps soit limité ou bloqué;

b) au moins l'une (19), des deux butées prévues sur l'organe d'actionnement (13) est de construction élastiquement déformable et elle est montée, par rapport à la butée (9) solidaire du corps, de telle manière que, lorsqu'on enfonce l'organe d'actionnement (13) dans la cavité du corps, elle puisse franchir la butée (9) solidaire du corps en subissant une déformation élastique et qu'après avoir repris ensuite sa forme initiale, elle coopère avec la butée (9) solidaire du corps à la façon d'un assemblage à encliquetage;

c) la première butée (19), la deuxième butée (18) et les moyens d'étanchéité (16) sont assemblés à l'organe d'actionnement (13) de façon inamovible ou forment une unité en une seule pièce avec l'organe d'actionnement (13).

2. Dispositif d'actionnement selon la revendication 1, caractérisé en ce que la première butée (19) et la deuxième butée (18) sont disposées sur au moins une partie de la circonférence de l'organe d'actionnement (13), à une distance d'écartement axial mutuel pouvant être prédéterminée.

3. Dispositif d'actionnement selon au moins une des revendications précédentes, caractérisé en ce que les deux butées (19, 18) de l'organe d'actionnement (13) sont formées par les parois opposées face à face d'un évidement (14) en forme de rainure qui est prévu sur l'organe d'actionnement (13) et s'étend dans la direction circonférentielle de l'organe d'actionnement (13).

4. Dispositif d'actionnement selon au moins une des revendications précédentes, caractérisé en ce que la première butée (19) présente une région de bord (12) de configuration conique, qui sert de surface de glissement pour la butée solidaire du corps.

5. Dispositif d'actionnement selon au moins une des revendications précédentes, caractérisé par les traits caractéristiques suivants:

a) la cavité ouverte du corps destinée à recevoir l'organe d'actionnement (13) est constituée par un alésage étagé (9, 10, 11), les étages présentant des diamètres qui diminuent en se dirigeant vers l'intérieur du corps de la soupape;

b) l'organe d'actionnement (13) est de configuration étagée, les étages présentant des diamètres qui diminuent en se dirigeant vers l'intérieur du corps de la soupape;

c) la région terminale de l'organe d'actionnement (13) dirigée vers l'intérieur du corps de la soupape présente une saillie circonférentielle s'étendant radialement vers l'extérieur, qui joue le rôle de la première butée (19) de l'organe d'actionnement (13);

d) l'étage (9) de l'alésage étagé (9, 10, 11) qui est dirigé vers l'intérieur du corps de la soupape joue le rôle de butée solidaire du corps;

e) l'étage de l'organe d'actionnement (13) qui est à l'opposé de la première butée (19) joue le rôle de la deuxième butée (18) de l'organe d'actionnement;

f) la butée (9) solidaire du corps est disposée de telle manière que, lorsque l'organe d'actionnement (13) est monté, il soit placé avec ses deux surfaces de butée (11, 27) qui sont dos à dos entre les deux butées (19, 18) de l'organe d'actionnement (13);

g) sur la circonférence de la partie de l'organe d'actionnement (13) qui présente le plus grand diamètre, est prévu un élément d'étanchéité (16, 28) qui s'appuie à joint étanche contre la paroi de la partie (10) de l'alésage étagé (9, 10, 11) qui présente le plus grand diamètre.

6. Dispositif d'actionnement selon au moins une des revendications précédentes, caractérisé en ce qu'il est prévu, comme moyens pour former le joint étanche sur la circonférence de l'organe d'actionnement, un bourrelet circonférentiel (28) qui est appuyé à joint étanche contre la paroi (10) de la cavité ouverte (9, 10, 11) du corps.

7. Dispositif d'actionnement selon au moins une des revendications précédentes 1 à 5, caractérisé en ce qu'il est prévu, comme moyens pour former le joint étanche sur la circonférence de l'organe d'actionnement, une lèvre d'étanchéité circonférentielle (16) qui est en appui à joint étanche contre la paroi (10) de la cavité ouverte (9, 10, 11) du corps.

8. Dispositif d'actionnement selon au moins l'une des revendications précédentes, caractérisé en ce que la deuxième butée (18) est formée par l'élément d'étanchéité prévu sur la circonférence de l'organe d'actionnement (13).

9. Dispositif d'actionnement selon au moins une des revendications précédentes, caractérisé en ce que les moyens de retenue et les moyens d'étanchéité sont constitués par une matière élastique et sont réunis à l'organe d'actionnement d'une façon inamovible.

10. Dispositif d'actionnement selon au moins une des revendications précédentes, caractérisé en ce que l'organe d'actionnement (13), avec les moyens de retenue et les moyens d'étanchéité, est fabriqué sous la forme d'une pièce de matière plastique moulée par injection.

11. Dispositif d'actionnement selon au moins une des revendications précédentes, caractérisé en ce que les moyens servant pour le montage de l'organe d'actionnement à joint étanche dans la cavité du corps sont constitués par une saillie circonférentielle qui est prévue sur le côté de la première butée de l'organe d'actionnement (13) qui regarde vers la surface de butée correspondante (27) de la butée (9) solidaire du corps.

FIG. 1

FIG. 2

FIG. 3